# EUROPEAN PATENT APPLICATION

(11) **EP 3 904 548 A1**
(43) Date of publication of application: **03.11.2021**
(21) Application number: 20875659.3
(22) Date of filing: 02.12.2020
(51) Int. Cl.: C22C 1/04, C22C 19/07, C22F 1/00, C22F 1/10, B33Y 10/00, B33Y 80/00, B33Y 70/00, B22F 3/105, B22F 3/15, B22F 3/16, B22F 3/17, B22F 3/24

(54) **Co-BASED ALLOY STRUCTURE AND PRODUCTION METHOD THEREFOR**

(30) Priority: 02.03.2020 JP 2020035211
(71) Applicant: Mitsubishi Power, Ltd., Nishi-ku, Yokohama-shi Kanagawa 220-8401 (JP)
(72) Inventor: Ota, Atsuo, Yokohama-shi, Kanagawa (JP); Imano, Shinya, Yokohama-shi, Kanagawa (JP)
(74) Representative: Strehl Schübel-Hopf & Partner
(86) International application number: PCT/JP2020/044870
(87) International publication number: WO 2021/176784

(57) **Abstract**

A Co-based alloy structure includes: a matrix phase (γ phase) having an fcc structure and containing mainly Co; and a precipitated phase (γ' phase) that contains an intermetallic compound having an L1₂ fcc structure, such as Co₃(Al,W) in terms of an atomic ratio, and that is dispersively precipitated in the matrix phase. The Co-based alloy structure is configured to include the γ' phase having a grain size of 10 nm to 1 µm, and grains of the γ' phase uniformly disposed and precipitated, and to have a precipitation amount of 40 vol% to 85 vol%.

## Description

### TECHNICAL FIELD

The present invention relates to a Co-based alloy structure and a method for manufacturing the same.

### BACKGROUND ART

A cobalt (Co)-based alloy is, as well as a nickel (Ni)-based alloy, a representative heat resistant alloy material, and is also called a superalloy and widely used for high-temperature members such as turbines, (a gas turbine, a steam turbine, and the like). In addition, the Co-based alloy is higher in costs than the Ni-based alloy, but is excellent in corrosion resistance and wear resistance and has a property of being easily solid-solution-strengthened. Therefore, the Co-based alloy has been applied to a turbine stator blade, a combustor member, a friction stir welding tool, and the like.

As such a Co-based alloy, for example, a Co-based alloy of Patent Document 1 is known. Specifically, Patent Document 1 discloses a Co-based alloy that includes: a matrix phase (γ phase) having an fcc structure and containing mainly Co; and a precipitated phase (γ' phase) that contains an intermetallic compound having an L1₂ fcc structure of Co₃(A1,W) in terms of an atomic ratio, and that is precipitated in grains of the matrix phase.

### CITATION LIST

### PATENT DOCUMENT

PATENT DOCUMENT 1: Japanese Patent No. 4996468

### SUMMARY OF THE INVENTION

### TECHNICAL PROBLEM

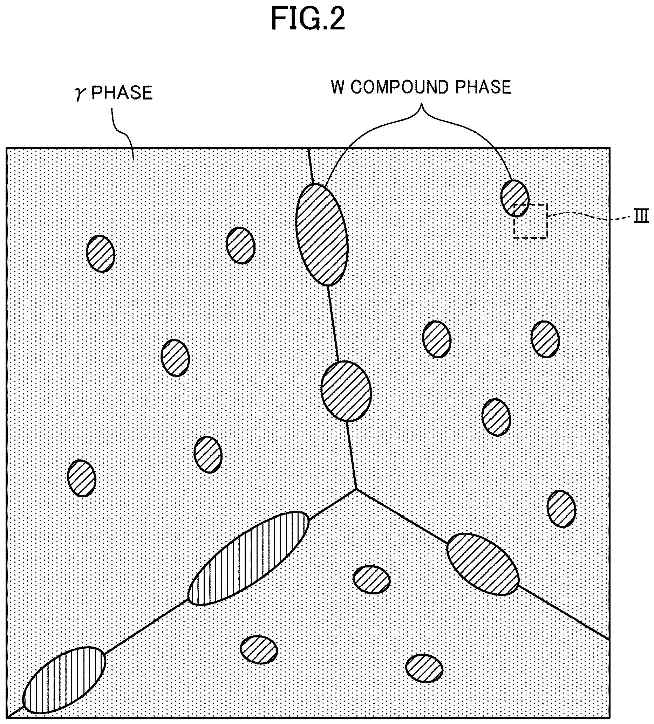

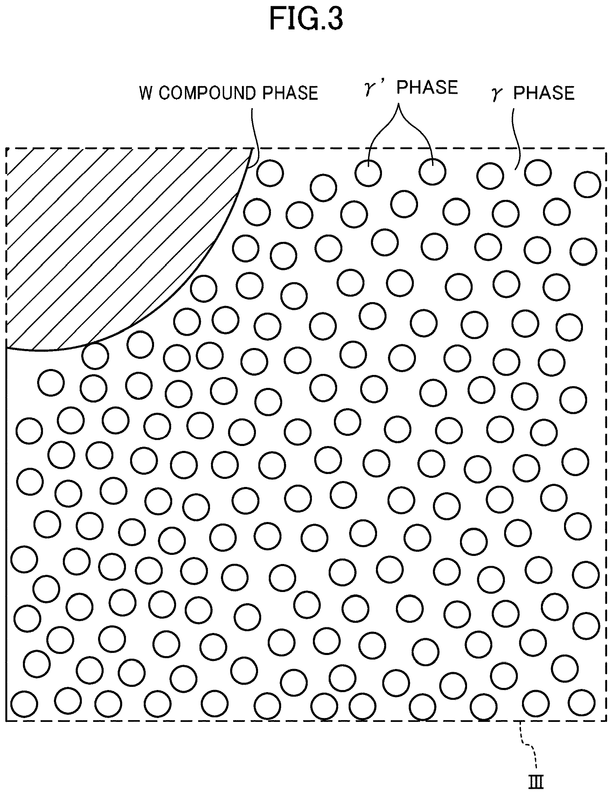

In the Co-based alloy of Patent Document 1, the precipitated phase (γ' phase) is set to have a grain size of 50 nm to 1 µm, and a precipitation amount of the γ' phase is set to be 40 vol% to 85 vol%. In addition, the drawings (particularly FIGS. 2 and 3) of the document seemingly show that grains of the γ' phase having a cubic shape with a grain size of 1 µm or less are precipitated in the matrix phase (γ phase). Further, the document indicates that the precipitated phase (γ" phase) precipitated through an aging treatment has an average grain size of 150 nm or less (see paragraph [0006] of the document).

With the drawings of Patent Document 1 referred to, however, it is understandable that the γ' phase having a grain size of less than 50 nm is hardly precipitated. Further, there are locations where the distance between grains of the γ' phase is larger than 100 nm. Specifically, in the Co-based alloy, multiple grains of the γ' phase that have been extremely fine are not being precipitated and dispersed (uniformly disposed) in the matrix phase (γ phase). Therefore, the Co-based alloy material is less likely to obtain an action of precipitation strengthening based on the γ' phase that is extremely fine so as to have a grain size of less than 50 nm, resulting in insufficient mechanical characteristics (particularly tensile strength and yield strength) based on the action.

The present disclosure has been made in view of the points described above, and it is an object of the present disclosure to enhance the mechanical characteristics of the Co-based alloy structure.

### SOLUTION TO THE PROBLEM

In order to achieve the object, a first disclosure is directed to a Co-based alloy structure having composition that has 0.1% to 10% of Al and 3.0% to 45% of W in terms of a mass ratio, and a total of the Al and the W of less than 50%, with a balance being Co besides unavoidable impurities. The Co-based alloy structure includes: a matrix phase (γ phase) having an fcc structure and containing mainly Co; and a precipitated phase (γ' phase) that contains an intermetallic compound having an L1₂ fcc structure of Co₃(Al,W) or [(Co,X)₃(Al,W,Z)] in terms of an atomic ratio, and that is dispersively precipitated in the matrix phase. In addition, the Co-based alloy structure is configured to include the precipitated phase (γ' phase) having a grain size of 10 nm to 1 µm, and grains of the precipitated phase (γ' phase) uniformly disposed and precipitated, and to have a precipitation amount of 40 vol% to 85 vol%.

In the first disclosure, the Co-based alloy structure is configured to include a precipitated phase (γ" phase) that is dispersively precipitated in a matrix phase (γ phase) and has a grain size of 10 nm to 1 µm and to have a precipitation amount of the γ' phase of 40 vol% to 85 vol%. This configuration allows multiple grains of the γ' phase that have been extremely fine to be precipitated and dispersive in the matrix phase (γ phase). As a result, the total surface area of the interfaces between the matrix phase (γ phase) and the multiple grains of the γ' phase is relatively increased, and the distance between the grains of the γ' phase becomes relatively short, in the formation of the Co-based alloy structure. Specifically, the γ' phase including extremely fine grains are being uniformly precipitation-strengthened in the matrix phase (γ phase). The precipitation strengthening improves the mechanical characteristics particularly at high temperatures. Accordingly, the first disclosure enables enhancement of the mechanical characteristics of the Co-based alloy structure.

In a second disclosure according to the first disclosure, the precipitated phase (γ' phase) has a grain size in a range of 10 nm or more to less than 50 nm.

In the second disclosure, multiple grains of the γ' phase that have been fine are precipitated and dispersive in the matrix phase (γ phase). This enhances the action of precipitation strengthening by the γ' phase, thereby enableing further enhancement of the mechanical characteristics of the Co-based alloy structure.

In a third disclosure according to the first or second disclosure, the Co-based alloy structure is configured as an additive manufacturing object made from a powder.

In the third disclosure, precipitates such as a W compound are precipitated in a fine state and uniformly dispersive in the matrix phase (γ phase) at grain boundaries and/or in grains of the additive manufacturing object made from the powder. In addition, multiple fine grains of the γ' phase are dispersive around the precipitates in the matrix phase (γ phase). Thus, the Co-based alloy structure configured as the additive manufacturing object made from the powder generates the action caused by precipitation strengthening of both the precipitates and the multiple fine grains of the γ' phase. As a result, the third disclosure enables further enhancement of the mechanical characteristics of the Co-based alloy structure.

In a fourth disclosure according to the first or second disclosure, the Co-based alloy structure is configured as a powder HIP forged object made from a powder.

The fourth disclosure enables enhancement of the mechanical characteristics of the Co-based alloy structure.

In a fifth disclosure according to the third or fourth disclosure, the powder has composition having 2% to 5% of Al, 17% to 25% of W, 0.05% to 0.15% of C, 20% to 35% of Ni, 6% to 10% of Cr, and 3% to 8% of Ta in terms of a mass ratio, with a balance being Co besides unavoidable impurities.

In the fifth disclosure, the additive manufacturing object made from the powder having the above-described composition enables the grain size of the precipitated phase (γ' phase) to be extremely minimal. This enables further enhancement of the mechanical characteristics of the Co-based alloy structure.

In a sixth disclosure according to the first or second disclosure, the Co-based alloy structure is configured as a forged object.

The sixth disclosure enables enhancement of the mechanical characteristics of the Co-based alloy structure.

A seventh disclosure is directed to a method for manufacturing the Co-based alloy structure according to the first or second disclosure. The method include: a solution treatment step of performing a solution treatment on a precursor of the Co-based alloy structure; and an aging treatment step of performing an aging treatment on the precursor of the Co-based alloy structure that has undergone the solution treatment. The aging treatment step includes a first aging treatment step and a second aging treatment step performed after the first aging treatment step. An aging temperature of the second aging treatment step is set to be higher than an aging temperature of the first aging treatment step.

In the aging treatment step of this seventh disclosure, the aging temperature of the second aging treatment step performed after the first aging treatment step is set to be higher than the aging temperature of the first aging treatment step. This setting enables the grain size of the γ' phase to be extremely minimal in the formation of the Co-based alloy structure. In addition, micro segregation becomes less likely to be generated in the formation of the Co-based alloy structure and the γ' phase is uniformly dispersed in the matrix phase (γ phase). This enhances the action of precipitation strengthening by the γ' phase, thereby enabling further enhancement of the mechanical characteristics of the Co-based alloy structure.

An eighth disclosure according to the seventh disclosure is directed to the method for manufacturing the Co-based alloy structure, wherein a temperature of the solution treatment is 1100°C or more, the aging temperature of the first aging treatment step is 500°C to 700°C, and the aging temperature of the second aging treatment step is 600°C to 800°C.

The eighth disclosure allows an advantage similar to that of the seventh disclosure to be exhibited.

A ninth disclosure according to the seventh or eighth disclosure is directed to the method for manufacturing a Co-based alloy structure, wherein the precursor of the Co-based alloy structure is manufactured by additive manufacturing.

The ninth disclosure enables further enhancement of the mechanical characteristics of the Co-based alloy structure.

A tenth disclosure according to the seventh or eighth disclosure is directed to the method for manufacturing a Co-based alloy structure, wherein the precursor of the Co-based alloy structure is manufactured by forging.

The tenth disclosure enables enhancement of the mechanical characteristics of the Co-based alloy structure.

An eleventh disclosure according to the seventh or eighth disclosure is directed to the method for manufacturing a Co-based alloy structure, wherein the precursor of the Co-based alloy structure is manufactured by powder HIP forging.

The eleventh disclosure enables enhancement of the mechanical characteristics of the Co-based alloy structure.

### ADVANTAGES OF THE INVENTION

The present disclosure enables enhancement of the mechanical characteristics of the Co-based alloy structure.

### BRIEF DESCRIPTION OF THE DRAWINGS

FIG. 1 is a flow chart illustrating exemplary steps of a method for manufacturing a Co-based alloy structure made from an additive manufacturing object.
FIG. 2 is a schematic view schematically illustrating a state of formation of the Co-based alloy structure made from the additive manufacturing object.
FIG. 3 is a partially enlarged view of a III portion in FIG. 2.
FIG. 4 is a flow chart illustrating exemplary steps of a method for manufacturing a Co-based alloy structure according to a first variation of an embodiment.
FIG. 5 is a flow chart illustrating exemplary steps of a method for manufacturing a Co-based alloy structure according to the first variation of the embodiment.
FIG. 6 is an electron micrograph illustrating a state of formation in a sample A.
FIG. 7 is an electron micrograph illustrating a state of formation in a sample B.
FIG. 8 is a graph illustrating relationships between temperature (°C) and each of tensile strength (MPa) and 0.2% yield strength (MPa) in the sample A and B.

### DESCRIPTION OF EMBODIMENTS

Embodiments of the present disclosure will be described in detail with reference to the drawings. The following embodiments are merely exemplary ones in nature, and are not intended to limit the scope, applications, or use of the disclosure.

### [Basic Properties of Co-based Alloy Structure]

A Co-based alloy has a melting point approximately 50°C to 100°C higher than the melting point of a commonly used Ni-based alloy and has a diffusion coefficient of a substitutional element smaller than the diffusion coefficient of the Ni-based alloy. Therefore, the Co-based alloy has a small change in the formation that is generated during use at high temperatures. In addition, the Co-based alloy is more abundant in ductility than the Ni-based alloy. Therefore, the Co-based alloy easily undergoes deformation processing such as forging, rolling, and pressing. Accordingly, the Co-based alloy is expected to expand its application wider than the Ni-based alloy.

The γ' phase of Co₃Ti or Co₃Ta that has been used as a strengthening phase has a mismatch in lattice constant with respect to the matrix phase (γ phase) of 1% or more and is disadvantageous in terms of creep resistance. An intermetallic compound [Co₃(Al,W)] used as the strengthening phase in the embodiments of the present disclosure, however, has a mismatch with the matrix phase (γ phase) of approximately 0.5% at most and exerts formation stability exceeding the formation stability of the Ni-based alloy that has been precipitation-strengthened by the γ' phase.

Further, the Co-based alloy has an elastic modulus that is as large as 220 GPa to 230 GPa, which is 10% or more larger than 200GPa of the Ni-based alloy. Therefore, the Co-based alloy is also applicable to applications requiring high strength and high elasticity, such as a spiral spring, a spring, a wire, a belt, and a cable guide. In addition, the Co-based alloy is hard and excellent in wear resistance and corrosion resistance to be also applicable as an overlay material.

### [Basic Composition of Co-based Alloy Structure]

The Co-based alloy structure according to the embodiments of the present disclosure contains an L1₂ intermetallic compound, [Co₃(Al,W)] or [(Co,X)₃(Al,W,Z)], dispersed therein in an appropriate amount, and the components and the composition of the Co-based alloy structure are therefore specified. The Co-based alloy structure has, as basic composition, composition having 0.1% to 10% of Al and 3.0% to 45% of W in terms of a mass ratio, with a balance being cobalt (Co) besides unavoidable impurities.

The aluminum (Al) is a main constituent element of the γ' phase. The Al also contributes to improvement in oxidation resistance. With the content of the Al being less than 0.1%, the γ' phase is not precipitated, or does not contribute to high-temperature strength even precipitated. Excessive addition of the Al, however, helps generation of a weak and hard phase. Accordingly, the content of the Al is set in the range of 0.1% to 10%. A preferable lower limit of the content of the Al is 0.5%. A preferable upper limit of the content of the Al is 5.0%.

Tungsten (W) is a main constituent element of the γ' phase. W has an action for solid-solution strengthening the matrix. With the content of the W being less than 3.0%, the γ' phase is not precipitated, or does not contribute to high-temperature strength even precipitated. The content of W exceeding 45%, however, promotes generation of a harmful phase. For this reason, the content of the W is set in the range of 3.0% to 45%. A preferable upper limit of the content of W is 30%. A preferable lower limit of the content of W is 4.5%.

### [Group (I) and Group (II)]

To the basic component system of Co-W-Al, one, or two or more alloy components (optional elements) selected from at least one of Group (I) or (II) are added as necessary. When a plurality of alloy components selected from Group (I) are added, the selection is made so that the total amount of the alloy components added is in the range of 0.001% to 2.0%. When a plurality of alloy components selected from Group (II) are added, the selection is made so that the total amount of the alloy components added is in the range of 0.1% to 50%.

Group (I) is a group consisting of B, C, Y, La, and a mischmetal.

Boron (B) is an alloy component that is segregated at crystal grain boundaries to strengthen the grain boundaries. B contributes to improvement in high-temperature strength. An effect of adding B becomes prominent at 0.001% or more. Excessive addition of B, however, impairs processability. For this reason, the upper limit of the amount of B added is set at 1.0%. A preferable upper limit of the amount of B added is 0.5%.

Carbon (C) is, similarly to B, effective for strengthening the grain boundaries. In addition, C is precipitated as a carbide to improve high-temperature strength. Such an effect can be obtained when the amount of C added is 0.001% or more. Excessive addition of C, however, impairs processability and/or toughness. For this reason, the upper limit of the amount of C added is set at 2.0%. A preferable upper limit of the amount of C added is 1.0%.

Yttrium (Y), Lanthanum (La), and the mischmetal are each a component effective for improving oxidation resistance. Particularly, Y, La, and the mischmetal each exhibit the oxidation resistance when the amount thereof added is 0.01% or more. Excessive addition of each of Y, La, and the mischmetal, however, can adversely affect formation stability. For this reason, the upper limit of the amount of each of Y, La, and the mischmetal added is set at 1.0%. A preferable upper limit of the amount of each of Y, La, and the mischmetal added is 0.5%.

Group (II) is a group consisting of Ni, Cr, Ti, Fe, V, Nb, Ta, Mo, Zr, Hf, Ir, Re, and Ru.

Among the alloy components of Group (II), an element having a larger distribution coefficient is more effective for stabilizing the γ' phase. A distribution coefficient Kxγ'/γ is represented by an equation Kxγ'/γ = Cxγ'/Cxγ (where Cxγ' represents the concentration (atom%) of element x in the γ' phase and Cxγ represents the concentration (atom%) of element x in the matrix (y) phase). The equation Kxγ'/γ = Cxγ'/Cxγ represents the concentration ratio of a prescribed element contained in the γ' phase to in the matrix phase (γ phase). An element satisfying a distribution coefficient ≥ 1 stabilizes the γ' phase. An element satisfying a distribution coefficient < 1 stabilizes the matrix phase (γ phase). Titanium (Ti), vanadium (V), niobium (Nb), tantalum (Ta), and molybdenum (Mo) are elements for stabilizing the γ' phase. Particularly, Ta exerts the effect for stabilizing the γ' phase more easily than the other elements.

Nickel (Ni) is a component that is substituted for Co of the L1₂ intermetallic compound to improve heat resistance and/or corrosion resistance. When the amount of Ni added is 1.0% or more, the effect (heat resistance and/or corrosion resistance) of the addition can be exhibited. Excessive addition of Ni, however, generates a harmful compound phase. For this reason, the upper limit of the amount of Ni added is set at 50%. A preferable upper limit of the amount of Ni added is 40%. Ni is substituted for each of Al and W to improve the degree of stability of the γ' phase. As a result, the stable presence of the γ' phase at higher temperatures is made possible.

Iridium (Ir) is a component that is substituted for Co of the L1₂ intermetallic compound to improve heat resistance and/or corrosion resistance. With the amount of Ir added being 1.0% or more, the effect of the addition is exhibited. Excessive addition of Ir, however, generates a harmful compound phase. For this reason, the upper limit of the amount of Ir added is set at 50%. A preferable upper limit of the amount of Ir added is 40%.

Iron (Fe) is substituted for Co to have an action of improving processability. The action becomes prominent when the amount of Fe added is 1.0% or more. However, excessive addition of Fe, such as an amount of Fe added exceeding 10%, may cause unstable formation in a high-temperature range. For this reason, the upper limit of the amount of Fe added is set at 10%. A preferable upper limit of the amount of Fe added is 5.0%.

Chromium (Cr) is an alloy component that generates a dense oxide film on the surface of the Co-based alloy structure to improve oxidation resistance. In addition, Cr contributes to improvement in high-temperature strength and/or corrosion resistance. Such an effect becomes prominent when the amount of Cr added is 1.0% or more. Excessive addition of Cr, however, may cause deterioration in processability. For this reason, the upper limit of the amount of Cr added is set at 20%. A preferable upper limit of the amount of Cr added is 15%.

Molybdenum (Mo) is an alloy component effective for stabilizing the γ' phase and solid-solution strengthening the matrix. Particularly, with the content of Mo being 1.0% or more, the effect of the addition of Mo can be exhibited. Excessive addition of Mo, however, may cause deterioration in processability. Therefore, the upper limit of the content of Mo is set at 15%. A preferable upper limit of the content of Mo is 10%.

Rhenium (Re) and ruthenium (Ru) are alloy components effective for improving oxidation resistance. The effect of the addition becomes prominent when Re and Ru are each at 0.5% or more. Excessive addition of each of Re and Ru, however, provokes generation of a harmful phase. For this reason, the upper limit of the amount of each of Re and Ru added is set at 10%. A preferable upper limit of the amount of each of Re and Ru added is 5.0%.

Titanium (Ti), niobium (Nb), zirconium (Zr), vanadium (V), tantalum (Ta), and hafnium (Hf) are each an alloy component effective for stabilizing the γ' phase and/or improving high-temperature strength. Particularly, with the amount of Ti added being 0.5% or more, the amount of Nb added being 1.0% or more, the amount of Zr added being 1.0% or more, the amount of V added being 0.5% or more, the amount of Ta added being 1.0% or more, and the amount of Hf added being 1.0% or more, the effect of the addition can be obtained. Excessive addition of each of Ti, Nb, Zr, V, Ta, and Hf, however, may cause generation of a harmful phase and/or reduction in the melting point. For this reason, the upper limits of the amounts of Ti, Nb, Zr, V, Ta, and Hf added are set at 10%, 20%, 10%, 10%, 20%, and 10%, respectively.

### [Grain Size of γ' Phase]

The L1₂ intermetallic compound, [Co₃(Al,W)] or [(Co,X)₃(Al,W, Z)], is configured so that grains of the precipitated phase (γ' phase) has a grain size of 10 nm to 1 µm (1000 nm). The grain size exceeding 1 µm deteriorates the mechanical characteristics such as strength and hardness. The preferable grain size of the γ' phase is in the range of 10 nm or more to less than 50 nm.

### [Amount of γ' Phase Precipitated]

The L1₂ intermetallic compound, [Co₃(Al,W)] or [(Co,X)₃(Al,W, Z)], is configured so that the amount of the phase (γ' phase) precipitated is 40 vol% to 85 vol%. The amount of the phase precipitated being less than 40% causes insufficient action caused by precipitation strengthening. On the other hand, the amount of the phase precipitated exceeding 85% may deteriorate ductility in the Co-based alloy structure.

### [Additive Manufacturing Object]

The Co-based alloy structure is configured as, for example, an additive manufacturing object made from a powder. The additive manufacturing object is formed by additive manufacturing (AM). The additive manufacturing is a method for forming an additive manufacturing object by selectively melting and solidifying a powder produced by a gas atomization, with a 3D printer using a laser or the like as a heat source.

In one preferred embodiment, as a raw material for the additive manufacturing object is used a powder (hereinafter referred to as a "raw material powder") having composition that has 2% to 5% of Al, 17% to 25% of W, 0.05% to 0.15% of C, 20% to 35% of Ni, 6% to 10% of Cr, and 3% to 8% of Ta in terms of a mass ratio, with a balance being Co besides unavoidable impurities. The manufacturing method, which will be described below, is performed using this raw material powder to obtain an additive manufacturing object having the same composition as the composition of the raw material powder.

### [Method for Manufacturing Co-based Alloy Structure made from Additive Manufacturing Object]

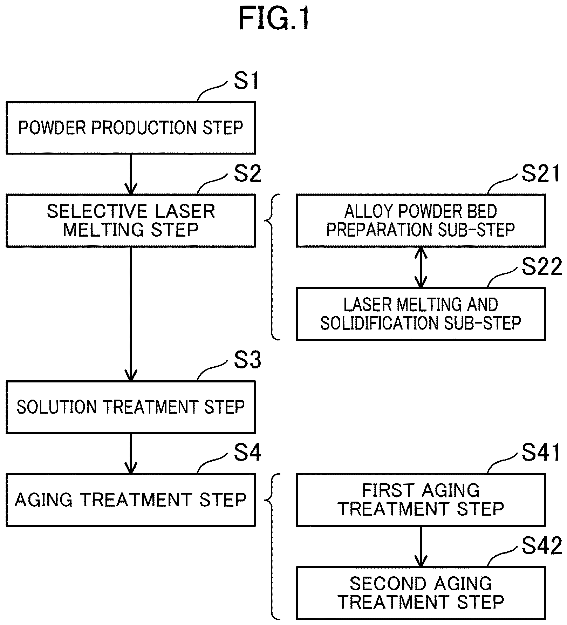

Next, one example of the method for manufacturing the Co-based alloy structure made from the additive manufacturing object is illustrated in FIG. 1. The manufacturing method includes, as main steps, a powder production step S1, a selective laser melting step S2, a solution treatment step S3, and an aging treatment step S4. Hereinafter, each of the steps is described.

### [Powder Production Step]

The powder production step S1 is a step of producing a powder serving as a raw material for the Co-based alloy structure. The powder has prescribed chemical composition as in, for example, the raw material powder described above.

As the method for producing the powder, gas atomization is used, for example. Specifically, high-frequency induction heating is performed using a gas atomizer to melt a sample in an inert gas atmosphere after evacuation or in an air atmosphere. Thereafter, a highpressure gas (gas such as helium, argon, or nitrogen) is blown to the sample to produce a spherical powder with a particle size of approximately several tens of micrometers.

In one preferred embodiment, the powder has a particle size of 5 µm or more to 100 µm or less from the viewpoint of handleability in the selective laser melting step (S2) performed subsequently and an alloy powder bed filling property. A powder having a particle size of less than 5 µm lowers flowability of the alloy powder in the subsequent step S2 (lowers formability for the alloy powder bed), which may cause a reduction in accuracy of the form of the additive manufacturing object. On the other hand, a powder having a particle size exceeding 100 µm makes it difficult to control local melting and rapid quenching and solidification of the alloy powder bed in the subsequent step S2, which results in insufficient melting of the powder, or may cause an increase in the surface roughness of the additive manufacturing object. The powder has a particle size of more preferably 10 µm or more to 70 µm or less, further more preferably 10 µm or more to 50 µm or less.

### [Selective Laser Melting Step]

The selective laser melting step S2 is a step of forming an additive manufacturing object in a desired shape by selective laser melting (SLM), using the powder produced in the powder production step S1.

As illustrated in FIG. 1, the step S2 includes an alloy powder bed preparation sub-step (S21) of spreading the powder produced in the powder production step S1 to prepare an alloy powder bed with a prescribed thickness; and a laser melting and solidification sub-step (S22) of irradiating a prescribed region of the alloy powder bed with laser light to locally melt the powder in the region and rapidly quench and solidify the powder. The alloy powder bed preparation sub-step (S21) and the laser melting and solidification sub-step (S22) are repetitively performed, thereby forming an additive manufacturing object (specifically, a precursor of the Co-based alloy structure).

In the selective laser melting step S2, the micro-formation of the additive manufacturing object is controlled in order to obtain a micro-formation desired as the final additive manufacturing object. Specifically, in order to control the micro-formation of the additive manufacturing object, the local melting and the rapid quenching and solidification of the powder bed are controlled.

### [Solution Treatment Step]

The solution treatment step S3 is a step of performing a solution treatment on the additive manufacturing object (the precursor of the Co-based alloy structure) obtained in the selective laser melting step S2. The temperature of the solution treatment is set in the range of 1100°C or more to 1200°C or less. A preferable temperature of the solution treatment is 1160°C. In one preferred embodiment, the retention time of the solution treatment is set to be 0.5 hours or more to 10 hours or less. A method of quenching after the heat treatment is not particularly limited, and any of, for example, water quenching, oil quenching, air quenching, and furnace quenching may be performed.

The solution treatment step S3 causes recrystallization of parent-phase crystal grains in the additive manufacturing object (the precursor of the Co-based alloy structure) obtained in the selective laser melting step S2, thereby relaxing internal strain generated in the additive manufacturing object during the rapid quenching and solidification. In one preferred embodiment, the recrystallization controls the average crystal grain size of the parent-phase crystal grains in the range of 20 µm or more to 145 µm or less to control coarsening of the grains. With the average crystal grain size being less than 20 µm or exceeding 145 µm, creep characteristics sufficient for the final Co-based alloy structure cannot be obtained.

### [Aging Treatment Step]

The aging treatment step S4 is a step of performing an aging treatment on the additive manufacturing object (the precursor of the Co-based alloy structure) that has undergone the solution treatment in the solution treatment step S3. Specifically, the aging treatment step S4 includes a first aging treatment step S41 and a second aging treatment step S42.

The first aging treatment step S41 is performed after the solution treatment step S3. In one preferred embodiment, the aging temperature of the first aging treatment step S41 is set in the range of 500°C or more to 700°C or less. In one preferred embodiment, the retention time of the first aging treatment step S41 is set to be 0.5 hours or more to 30 hours or less.

The second aging treatment step S42 is performed after the first aging treatment step S41. The aging temperature of the second aging treatment step S42 is set to be higher than the aging temperature of the first aging treatment step S41. Specifically, in one preferred embodiment, the aging temperature of the second aging treatment step S42 is set in the range of 600°C or more to 800°C or less. In one preferred embodiment, the retention time of the second aging treatment step S42 is set to be 0.5 hours or more to 20 hours or less.

The quenching in the first and second aging treatment steps S41 and S42 is not particularly limited, and may be any of, for example, water quenching, oil quenching, air quenching, and furnace quenching.

Meanwhile, a corrosion-resistant coating layer (not illustrated) may further be formed as necessary on the additive manufacturing object obtained in the solution treatment step S3 or the aging treatment step S4. Alternatively, surface finishing may be performed on the additive manufacturing object obtained in the solution treatment step S3 or the aging treatment step S4.

### [Action Effects of Embodiment]

As described above, the Co-based alloy structure is configured to include a precipitated phase (γ' phase) that is dispersively precipitated in a matrix phase (γ phase) and has a grain size of 10 nm to 1 µm and to have a precipitation amount of the precipitated phase (γ' phase) of 40 vol% to 85 vol%. This configuration allows multiple grains of the γ' phase having an extremely minimal grain size to be precipitated and dispersive in the matrix phase (γ phase). As a result, the total surface area of the interfaces between the matrix phase (γ phase) and multiple grains of the γ' phase relatively increases, and the distance between grains of the γ' phase is relatively shortened (becomes smaller than 100 nm) in the formation of the Co-based alloy structure. Specifically, the γ' phase including extremely fine grains are being uniformly precipitation-strengthened in the matrix phase (γ phase). The precipitation strengthening improves the mechanical characteristics (particularly tensile strength and yield strength (0.2% yield strength)) particularly at high temperatures. Accordingly, in the Co-based alloy structure according to the embodiment of the present disclosure, the mechanical characteristics based on the action of precipitation strengthening can be enhanced. The term "dispersive" in the embodiment of the present disclosure refers to the state in which a plurality of grains of the γ' phase are being uniformed disposed in the matrix phase (γ phase).

In one preferred embodiment, the γ' phase has a grain size in the range of 10 nm or more and less than 50 nm. If multiple grains of the γ' phase that have been refined in the manner described above are precipitated and dispersive in the matrix phase (γ phase), the action of precipitation strengthening by the γ' phase is enhanced, thereby enabling further enhancement of the mechanical characteristics of the Co-based alloy structure.

The Co-based alloy structure is configured as an additive manufacturing object made from a powder. The additive manufacturing using a metal 3D printer with particularly a laser used as a heat source makes the solidification speed of a powder serving as a raw material in manufacturing of an additive manufacturing object much higher than the solidification speed in commonly used casting. As a result, a fine, solidified formation is formed in the additive manufacturing object. Then, as illustrated in FIGS. 2 and 3, heat treatments (a solution treatment and an aging treatment) are performed on the manufactured additive manufacturing object to allow a W compound to be finely precipitated and uniformly dispersive in the matrix phase (γ phase) at grain boundaries and/or in grains of the additive manufacturing object. Further, in the matrix phase (γ phase), multiple fine grains of the precipitated phase (γ' phase) become dispersive around the W compound. Thus, the Co-based alloy structure configured as the additive manufacturing object made from the powder can obtain the action caused by precipitation strengthening of both the W compound and the multiple fine grains of the precipitated phase (γ' phase). As a result, in the Co-based alloy structure according to the embodiment of the present disclosure, the mechanical characteristics are can be further enhanced.

FIGS. 2 and 3 illustrate the state of formation in which the W compound has been precipitated. However, not the W compound but a carbide phase may be precipitated at the grain boundaries and/or in the grains of the additive manufacturing object. Alternatively, both the W compound and the carbide phase may be precipitated at the grain boundaries and/or in the grains of the additive manufacturing object.

The powder serving as a raw material for the layered structure has composition having 2% to 5% of Al, 17% to 25% of W, 0.05% to 0.15% of C, 20% to 35% of Ni, 6% to 10% of Cr, and 3% to 8% of Ta in terms of a mass ratio, with a balance being Co besides unavoidable impurities. The additive manufacturing object made from the powder having such composition enables the grain size of the precipitated phase (γ' phase) to be minimal. This enables further enhancement of the mechanical characteristics of the Co-based alloy structure.

Further, in the aging treatment step of the method for manufacturing the Co-based alloy structure, the aging temperature of the second aging treatment step performed after the first aging treatment step is set to be higher than the aging temperature of the first aging treatment step. Specifically, the temperature of the solution treatment is 1100°C or more, the aging temperature of the first aging treatment step is 500°C to 700°C, and the aging temperature of the second aging treatment step is set to be 600°C to 800°C. This setting enables the grain size of the precipitated phase (γ' phase) to be extremely minimal in the formation of the Co-based alloy structure. In addition, micro segregation becomes less likely to be generated in the formation of the Co-based alloy structure and the γ' phase is uniformly dispersed in the matrix phase (γ phase). This enhances the action of precipitation strengthening by the γ' phase, thereby enabling further enhancement of the mechanical characteristics of the Co-based alloy structure.

### [First Variation of Embodiment]

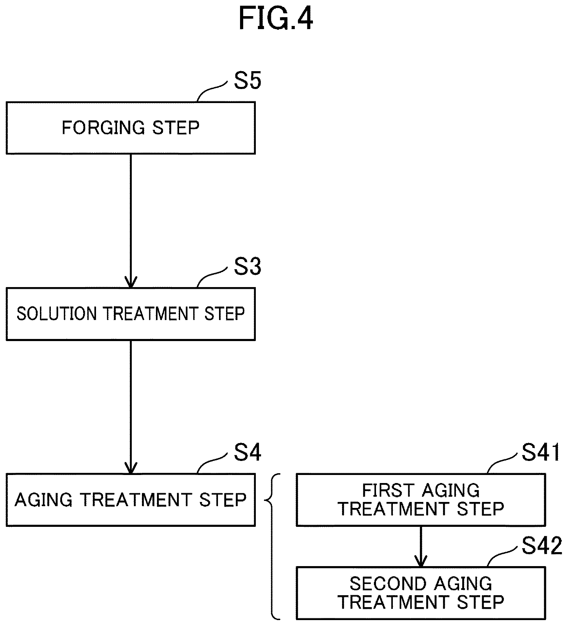

The Co-based alloy structure configured as an additive manufacturing object made from a powder has been described above as the embodiment. The Co-based alloy structure, however, is not limited to this form. Specifically, the precursor of the Co-based alloy structure may be configured as a forged object manufactured by forging, in place of the additive manufacturing object manufactured by additive manufacturing. Specifically, as the method for manufacturing the Co-based alloy structure, a method (see FIG. 4) including a forging step (S5) performed by forging in place of the powder production step (S1) and the selective laser melting step (S2) illustrated in FIG. 1 may be employed.

In the forging, a relatively coarse, solidified formation is formed immediately after casting, but a post-step of hot forging homogenizes the formation and allows crystal grains to be recrystallized and thus refined. In addition, the solution treatment step S3 and the aging treatment step S4 illustrated in FIG. 1 further fine grains of the precipitated phase (γ' phase) in the formation of the Co-based alloy structure and make micro segregation less likely be generated. Accordingly, even for the Co-based alloy structure made from a forged object, the mechanical characteristics can be increased similarly to the embodiment.

### [Second Variation of Embodiment]

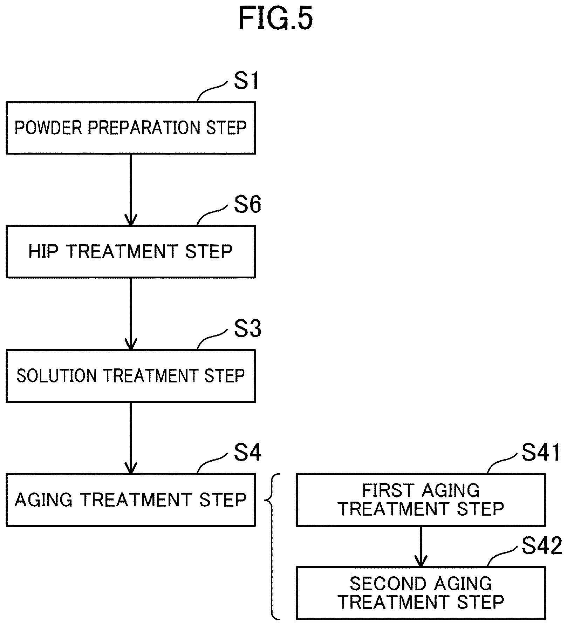

Alternatively, the precursor of the Co-based alloy structure may be configured as a powder HIP forged object manufactured by powder HIP forging, in place of the additive manufacturing object manufactured by additive manufacturing. Specifically, as the method for manufacturing the Co-based alloy structure, a method (see FIG. 5) including a HIP treatment step (S6) performed by powder HIP forging in place of the selective laser melting step (S2) illustrated in FIG. 1 may be employed.

The HIP treatment step (S6) is a step of filling a can with the powder produced by the powder production step (S1) and sintering the powder at high temperature under hydrostatic pressure. The formation of the powder produced by the powder production step (S1) is rapidly quenched and solidified by, for example, gas atomization. This allows the W compound and/or the carbide phase to be fine and dispersive at the grain boundaries and/or in the grains. Then, the solution treatment step (S3) and the aging treatment step (S4) further refine the grains of the γ' phase in the formation of the Co-based alloy structure and make the micro segregation less likely be generated. Accordingly, even for the Co-based alloy structure made from the powder HIP forged object, the mechanical characteristics can be increased similarly to the embodiment.

### [Other Embodiments]

In the powder production step (S1) illustrated in FIGS. 1 and 5, the method and technique for producing the powder serving as a raw material for the Co-based alloy are not particularly limited. Specifically, in the powder production step (S1), a commonly used method and technique may be used. For example, a parent alloy ingot (master ingot) production sub-step and an atomization sub-step may be performed The parent alloy ingot production sub-step includes mixing raw materials to have desired chemical composition, and melting and casting the raw materials to produce a parent alloy ingot, and the atomization sub-step includes forming an alloy powder from the parent alloy ingot. The atomization is also not particularly limited, and a generally used method and technique may be used. For example, a centrifugal atomization may be employed in place of the above-described gas atomization.

While the embodiment of the present disclosure has been described above, the present disclosure is not limited to only the embodiment, and various changes may be made without departing from the scope of the present disclosure

### EXAMPLES

Hereinafter, the present invention is further specifically described by way of a sample A (example) and a sample B (comparative example) produced through the following steps. It is to be noted that the present invention is not limited by these examples.

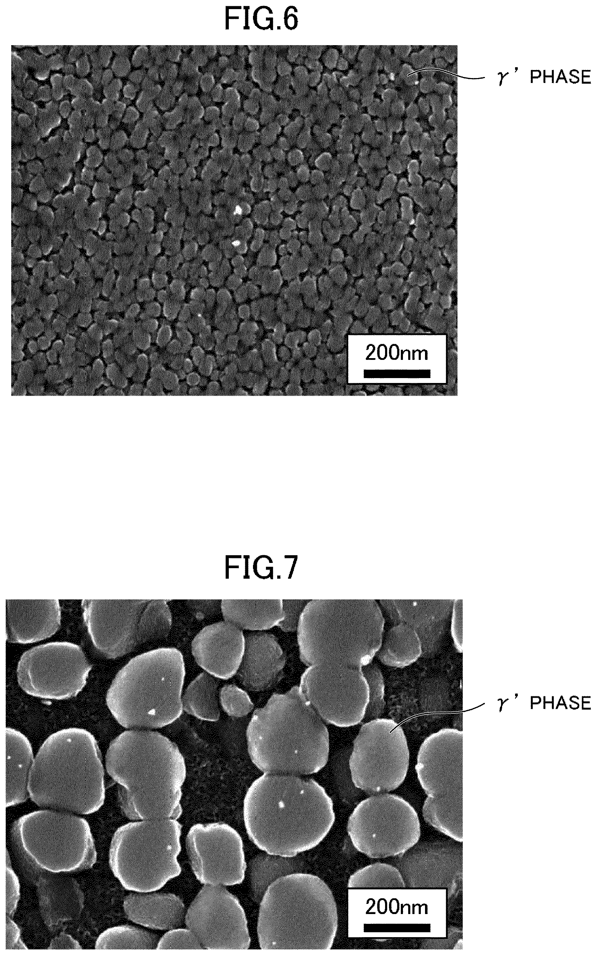

The sample A is a Co-based alloy structure formed from an additive manufacturing object produced through all the steps illustrated in FIG. 1. The sample A includes grains of the precipitated phase (γ' phase) having a grain size of less than 50 nm (see FIG. 6). On the other hand, the sample B is a Co-based alloy structure formed from an additive manufacturing object produced through all the steps except the second aging treatment step (S42) illustrated in FIG. 1. The sample B includes grains of the γ' phase having a grain size of about 250 nm (see FIG. 7).

First, in order to produce the samples A and B, the powder (raw material powder) serving as a raw material for the additive manufacturing object described in the embodiment was produced in the powder production step (S1) illustrated in FIG. 1. Specifically, the parent alloy ingot production sub-step of mixing prescribed raw materials, and then melting the raw materials using a vacuum high-frequency induction melting and then casting the raw materials to produce a parent alloy ingot. Next, performed was an atomization sub-step of remelting the parent alloy ingot and forming an alloy powder in an argon gas atmosphere by gas atomization. Next, the obtained powder underwent an alloy powder classification sub-step for controlling the particle size.

Using the raw material powder, an additive manufacturing object (diameter 8 mm × height 60 mm) was produced in the selective laser melting step (S2) illustrated in FIG. 1. As the conditions for the selective laser melting (SLM), a thickness h of the alloy powder bed was set at 100 µm, an output P of laser light was set at 100 W, and a scanning speed S (mm/s) of the laser light was variously changed to control a local heat input P/S (unit: W • S/mm = J/mm). The control of the local heat input corresponds to control of the quenching speed.

The additive manufacturing object (precursor) produced in the selective laser melting step (S2) underwent the solution treatment step (S3) illustrated in FIG. 1. In the present experiment, the temperature of the solution treatment was 1160°C. The retention time of the solution treatment was 4 hours.

Next, the additive manufacturing object (precursor) that has undergone the solution treatment underwent an aging treatment step. Specifically, the sample A underwent both the first aging treatment step (S41) and the second aging treatment step (S42) illustrated in FIG. 1. On the other hand, the sample B underwent only the first aging treatment step (S41) illustrated in FIG. 1. Specifically, the sample B did not undergo the second aging treatment step (S42) illustrated in FIG. 1.

In the present experiment, the temperature of the first aging treatment step (S41) was 650°C. The retention time of the first aging treatment step (S41) was 24 hours. The temperature of the second aging treatment step (S42) was 760°C. The retention time (S42) of the second aging treatment step was 16 hours.

As can be seen from FIGS. 6 and 7, the sample A that has undergone both the first and second aging treatment steps contains multiple fine grains of the precipitated phase (γ' phase) being uniformly, dispersively precipitated in the matrix phase (γ phase), compared with the sample B that has undergone only the first aging treatment step. Specifically, in the sample A, the uniform dispersion of the γ' phase in the matrix phase (γ phase) results in no generation of micro segregation in the formation of the Co-based alloy structure.

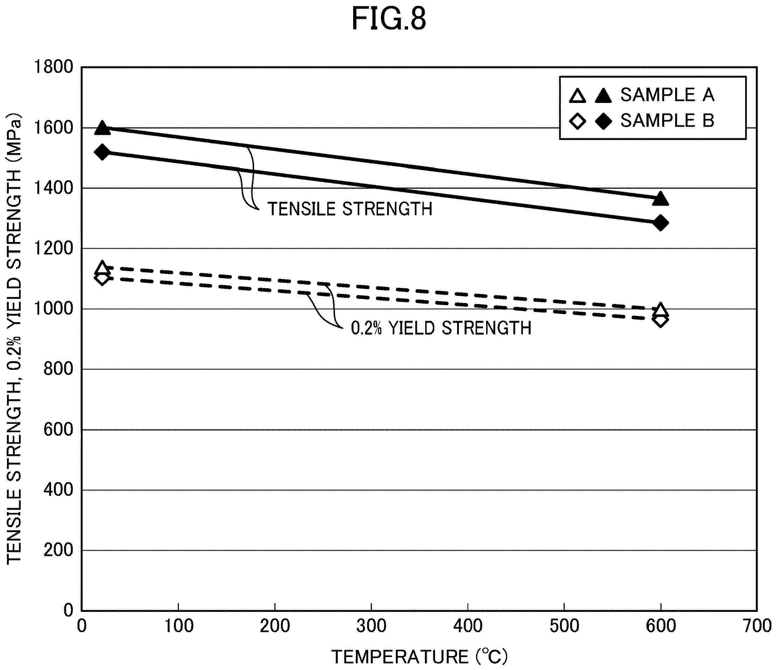

FIG. 8 is a graph illustrating relationships of tensile strength and 0.2% yield strength (MPa) with temperature changes (°C) in the samples A and B.

As can be seen from FIG. 8, numerical values of both of the tensile strength and the 0.2% yield strength in the sample A were higher than those of the sample B overall. Specifically, the tensile strength of the sample A was approximately 100 MPa higher than that of the sample B in the range of about 20°C to about 600°C. In addition, the 0.2% yield strength of the sample A was approximately 20 MPa higher than that of the sample B in the range of about 20°C to about 600°C.

As described above, the present experiment demonstrated that the sample A of the example that had undergone the first aging treatment step (S41) and the second aging treatment step (S42) to contain extremely fine grains of the γ' phase had improved the mechanical characteristics (tensile strength and 0.2% yield strength), compared with the sample B of the comparative example that had underwent only the first aging treatment step (S41).

### INDUSTRIAL APPLICABILITY

The present disclosure is industrially applicable as a Co-based alloy structure suitable for an application requiring high-temperature strength, high strength, high elasticity, and the like and as a method for manufacturing the Co-based alloy structure.

As can be seen from FIG. 8, numerical values of both of the tensile strength and the 0.2% yield strength in the sample A were higher than those of the sample B overall. Specifically, the tensile strength of the sample A was approximately 100 MPa higher than that of the sample B in the range of about 20°C to about 600°C. In addition, the 0.2% yield strength of the sample A was approximately 20 MPa higher than that of the sample B in the range of about 20°C to about 600°C.

As described above, the present experiment demonstrated that the sample A of the example that had undergone the first aging treatment step (S41) and the second aging treatment step (S42) to contain extremely fine grains of the γ' phase had improved the mechanical characteristics (tensile strength and 0.2% yield strength), compared with the sample B of the comparative example that had underwent only the first aging treatment step (S41).

### INDUSTRIAL APPLICABILITY

The present disclosure is industrially applicable as a Co-based alloy structure suitable for an application requiring high-temperature strength, high strength, high elasticity, and the like and as a method for manufacturing the Co-based alloy structure.

## Claims

1. A Co-based alloy structure having composition that has 0.1% to 10% of Al and 3.0% to 45% of W in terms of a mass ratio, and a total of the Al and the W of less than 50%, with a balance being Co besides unavoidable impurities, the Co-based alloy structure comprising:
a matrix phase (γ phase) having an fcc structure and containing mainly Co; and
a precipitated phase (γ' phase) that contains an intermetallic compound having an L1₂ fcc structure of Co₃(Al,W) or [(Co,X)₃(Al,W,Z)] in terms of an atomic ratio, and that is dispersively precipitated in the matrix phase,
the Co-based alloy structure being configured to comprise the precipitated phase (γ' phase) having a grain size of 10 nm to 1 µm, and grains of the precipitated phase (γ' phase) being uniformly disposed and precipitated, and to have a precipitation amount of 40 vol% to 85 vol%.

2. The Co-based alloy structure of claim 1, wherein
the precipitated phase (γ' phase) has a grain size in a range of 10 nm or more and less than 50 nm.

3. The Co-based alloy structure of claim 1 or 2, wherein
the Co-based alloy structure is configured as an additive manufacturing object made from a powder.

4. The Co-based alloy structure of claim 1 or 2, wherein
the Co-based alloy structure is configured as a powder HIP forged object made from a powder.

5. The Co-based alloy structure of claim 3 or 4, wherein
the powder has composition having 2% to 5% of Al, 17% to 25% of W, 0.05% to 0.15% of C, 20% to 35% of Ni, 6% to 10% of Cr, and 3% to 8% of Ta in terms of a mass ratio, with a balance being Co besides unavoidable impurities.

6. The Co-based alloy structure of claim 1 or 2, wherein
the Co-based alloy structure is configured as a forged object.

7. A method for manufacturing the Co-based alloy structure of claim 1 or 2, the method comprising:
a solution treatment step of performing a solution treatment on a precursor of the Co-based alloy structure; and
an aging treatment step of performing an aging treatment on the precursor of the Co-based alloy structure that has undergone the solution treatment,
the aging treatment step including a first aging treatment step and a second aging treatment step performed after the first aging treatment step,
an aging temperature of the second aging treatment step being set to be higher than an aging temperature of the first aging treatment step.

8. The method of claim 7, wherein
a temperature of the solution treatment is 1100°C or more,
the aging temperature of the first aging treatment step is 500°C to 700°C, and the aging temperature of the second aging treatment step is 600°C to 800°C.

9. The method of claim 7 or 8, wherein
the precursor of the Co-based alloy structure is manufactured by additive manufacturing.

10. The method of claim 7 or 8, wherein
the precursor of the Co-based alloy structure is manufactured by forging.

11. The method of claim 7 or 8, wherein
the precursor of the Co-based alloy structure is manufactured by powder HIP forging.
